# DEMANDE DE BREVET EUROPEEN

(11) **EP 3 543 966 A1**
(43) Date de publication de la demande: **25.09.2019**
(21) Numéro de dépôt: 19305346.9
(22) Date de dépôt: 21.03.2019
(51) Int. Cl.: G07C 9/00, G07D 7/2033, G07D 7/202, G07D 7/20

(54) **PROCÉDÉ D'ENRÔLEMENT DE DONNÉES POUR CONTRÔLER UNE IDENTITÉ, ET PROCÉDÉ DE CONTRÔLE D'IDENTITÉ**

(30) Priorité: 21.03.2018 FR 1852407
(71) Demandeur: Idemia Identity & Security France, 92400 Courbevoie (FR)
(72) Inventeur: CHABANNE, Hervé, 92130 ISSY LES MOULINEAUX (FR); BAHLOUL, Sébastien, 92130 ISSY LES MOULINEAUX (FR)
(74) Mandataire: Regimbeau

(57) **Abrégé**

La présente invention concerne un procédé d'enrôlement comprenant des étapes de : acquisition (100) d'une image montrant une photographie montrant elle-même un individu, extraction (102), depuis l'image d'une caractéristique de l'image autre qu'un modèle biométrique, obtention (104) de données personnelles de l'individu autrement que par l'algorithme de traitement d'image, génération (106) d'une donnée de référence (W) à partir de la caractéristique de l'image et des données personnelles obtenues, calcul (108) d'une donnée encodée (s) par application d'une procédure d'encodage à la donnée de référence (W) et à une donnée d'aléa (c), calcul (110) d'une empreinte (h(c)) de la donnée d'aléa, mémorisation (112) dans une base de données de la donnée encodée (s) en association avec l'empreinte. L'invention concerne également un procédé de contrôle d'identité utilisant de telles données mémorisées.

## Description

### DOMAINE DE L'INVENTION

La présente invention concerne un procédé d'enrôlement de données destinées à être utilisées pour contrôler l'identité d'un individu, et un procédé de contrôle d'identité.

### ETAT DE LA TECHNIQUE

On connaît du document FR3047688 un procédé d'enrôlement de données destinées à être utilisées pour contrôler l'identité d'un individu, le procédé comprenant des étapes de :
- acquisition d'une image de référence montrant une photographie, la photographie montrant elle-même un individu de référence,
- extraction, depuis l'image de référence et par un algorithme de traitement d'image, d'une caractéristique de l'image de référence autre qu'un modèle biométrique, dans lequel l'algorithme de traitement d'image est configuré pour:
   ∘ extraire, depuis toute image montrant une photographie montrant elle-même l'individu de référence, une caractéristique qui diffère de la caractéristique de l'image de référence par un écart inférieur à un seuil déterminé,
   ∘ extraire, depuis toute image ne montrant pas l'individu de référence, une caractéristique qui diffère de la caractéristique de l'image de référence par un écart supérieur au seuil déterminé,
- génération d'une donnée de référence à partir de la caractéristique de l'image de référence,
- calcul d'une donnée encodée par application d'une procédure d'encodage à la donnée de référence et à une donnée d'aléa,
- calcul d'une empreinte) de la donnée d'aléa par application d'une fonction cryptographique prédéterminée à la donnée d'aléa,
- mémorisation dans une base de données de la donnée encodée en association avec l'empreinte, en vue de leur utilisation pour contrôler l'identité d'un individu.

Le document FR3047688 décrit également un procédé de contrôle d'identité réutilisant les données mémorisées dans la base de données. Ce procédé comprend des étapes de :
- acquisition d'une image de contrôle montrant une photographie, la photographie montrant elle-même un individu,
- extraction, depuis l'image de contrôle et par un algorithme de traitement d'image, d'une caractéristique de l'image de contrôle autre qu'un modèle biométrique, dans lequel l'algorithme de traitement d'image est configuré pour:
   ∘ extraire, depuis toute image montrant une photographie montrant elle-même un individu de référence, une caractéristique qui diffère de la caractéristique de l'image de contrôle par un écart inférieur à un seuil déterminé,
   ∘ extraire, depuis toute image ne montrant pas l'individu de référence, une caractéristique qui diffère de la caractéristique de l'image de contrôle par un écart supérieur au seuil déterminé,
- génération d'une donnée de contrôle à partir de la caractéristique de l'image de contrôle,
- lecture, dans la base de données, d'une donnée encodée et d'une empreinte d'une donnée d'aléa associées à l'individu de référence,
- calcul d'une donnée décodée par application d'une procédure de décodage à la donnée de contrôle et à la donnée encodée lue,
- application d'une fonction cryptographique prédéterminée à la donnée décodée de sorte à produire un une empreinte) de la donnée décodée,
- comparaison entre l'empreinte obtenue et l'empreinte lue,
- génération d'un résultat de contrôle d'identité indiquant si l'individu montré par la photographie et l'individu visé par les données personnelles obtenues correspondent tous deux à l'individu de référence ou non, en fonction de la comparaison.

La base de données n'indique pas qui est l'individu associé à une donnée encodée et une empreinte, c'est-à-dire l'individu à partir duquel ces données ont été générées. Ainsi, un tiers ayant accès à cette base de données ne peut normalement pas savoir qui est l'individu qui est associé à une donnée encodée et une empreinte.

Néanmoins, ces données produites à partir de l'individu associé puis mémorisées dans la base de données peuvent présenter une faible entropie. Dès lors, une attaque par dictionnaire mise en oeuvre sur la base de données pourrait permettre à une personne malintentionnée de déterminer l'individu qui est associé à une donnée encodée et une empreinte.

### EXPOSE DE L'INVENTION

Un but de l'invention est de mieux protéger des données mémorisées dans une base de données en vue de leur utilisation pour contrôler l'identité d'un individu contre des attaques par dictionnaire.

Dans ce but, il est proposé, selon un premier aspect de l'invention, un procédé d'enrôlement de données destinées à être utilisées pour contrôler l'identité d'un individu, le procédé comprenant des étapes de :
- acquisition d'une image de référence montrant une photographie, la photographie montrant elle-même un individu de référence,
- extraction, depuis l'image de référence et par un algorithme de traitement d'image, d'une caractéristique de l'image de référence autre qu'un modèle biométrique, dans lequel l'algorithme de traitement d'image est configuré pour:
   ∘ extraire, depuis toute image montrant une photographie montrant elle-même l'individu de référence, une caractéristique qui diffère de la caractéristique de l'image de référence par un écart inférieur à un seuil déterminé,
   ∘ extraire, depuis toute image ne montrant pas l'individu de référence, une caractéristique qui diffère de la caractéristique de l'image de référence par un écart supérieur au seuil déterminé,
- génération d'une donnée de référence à partir de la caractéristique de l'image de référence,
- calcul d'une donnée encodée par application d'une procédure d'encodage à la donnée de référence et à une donnée d'aléa,
- calcul d'une empreinte) de la donnée d'aléa par application d'une fonction cryptographique prédéterminée à la donnée d'aléa,
- mémorisation dans une base de données de la donnée encodée en association avec l'empreinte, en vue de leur utilisation pour contrôler l'identité d'un individu,
le procédé comprenant par ailleurs une étape d'obtention de données personnelles de l'individu de référence autrement que par l'algorithme de traitement d'image, la donnée de référence étant générée également à partir des données personnelles obtenues.

Il est également proposé, selon un deuxième aspect de l'invention, un procédé de contrôle d'identité comprenant des étapes de :
- acquisition d'une image de contrôle montrant une photographie, la photographie montrant elle-même un individu,
- extraction, depuis l'image de contrôle et par un algorithme de traitement d'image, d'une caractéristique de l'image de contrôle autre qu'un modèle biométrique, dans lequel l'algorithme de traitement d'image est configuré pour:
   ∘ extraire, depuis toute image montrant une photographie montrant elle-même un individu de référence, une caractéristique qui diffère de la caractéristique de l'image de contrôle par un écart inférieur à un seuil déterminé,
   ∘ extraire, depuis toute image ne montrant pas l'individu de référence, une caractéristique qui diffère de la caractéristique de l'image de contrôle par un écart supérieur au seuil déterminé,
- obtention de données personnelles d'un individu autrement que par l'algorithme de traitement d'image,
- génération d'une donnée de contrôle à partir de la caractéristique de l'image de contrôle et à partir des données personnelles obtenues,
- lecture, dans une base de données, d'une donnée encodée et d'une empreinte d'une donnée d'aléa associées à l'individu de référence,
- calcul d'une donnée décodée par application d'une procédure de décodage à la donnée de contrôle et à la donnée encodée lue,
- application d'une fonction cryptographique prédéterminée à la donnée décodée de sorte à produire un une empreinte) de la donnée décodée,
- comparaison entre l'empreinte obtenue et l'empreinte lue,
- génération d'un résultat de contrôle d'identité indiquant si l'individu montré par la photographie et l'individu visé par les données personnelles obtenues correspondent tous deux à l'individu de référence ou non, en fonction de la comparaison.

Il est entendu que le procédé selon le premier aspect de l'invention et le deuxième procédé selon le deuxième aspect de l'invention peuvent être mise en oeuvre l'un après l'autre. Ils peuvent être mis en oeuvre par un même dispositif, ou être mis en oeuvre par deux dispositifs différents.

Le procédé selon le premier aspect de l'invention et le deuxième procédé selon le deuxième aspect de l'invention peuvent comprendre les caractéristiques suivantes, prises seules ou en combinaison.

La procédure d'encodage peut être une procédure d'esquisse d'un algorithme de type « secure sketch ». La procédure de décodage peut être une procédure de récupération d'un algorithme de type « secure sketch ».

Les données personnelles peuvent comprendre des données d'état civil.

L'image acquise peut montrer un document d'identité comprenant la photographie, et les données d'état civil peuvent être extraites de l'image acquise par une reconnaissance optique de caractères.

Les données personnelles peuvent comprendre un modèle biométrique.

Le modèle biométrique peut être généré à partir de l'image acquise.

La donnée de référence ou de contrôle peut être une concaténation de la caractéristique extraite et de chaque donnée personnelle.

La génération de la donnée dépendant de la caractéristique extraite et des données personnelles obtenues peut comprendre une permutation prédéterminée de la caractéristique extraite et des données personnelles avant leur concaténation.

La caractéristique de l'image acquise est par exemple un histogramme de gradient orienté.

Il est également proposé, selon un troisième aspect de l'invention, un produit programme d'ordinateur comprenant des instructions de code de programme pour l'exécution des étapes du procédé selon le premier et/ou le deuxième aspect de l'invention, lorsque ce procédé est exécuté par au moins un processeur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 illustre de façon schématique une base de données, un dispositif d'enrôlement et un dispositif de contrôle selon un mode de réalisation de l'invention.
- La figure 2 est un organigramme d'étapes d'un procédé d'enrôlement de données destinées à contrôler l'identité d'un individu, selon un mode de réalisation de l'invention.
- La figure 3 est un organigramme d'étapes d'un procédé de contrôle d'identité d'un individu, selon un mode de réalisation de l'invention.

Sur l'ensemble des figures, les éléments similaires portent des références identiques.

### DESCRIPTION DETAILLEE DE L'INVENTION

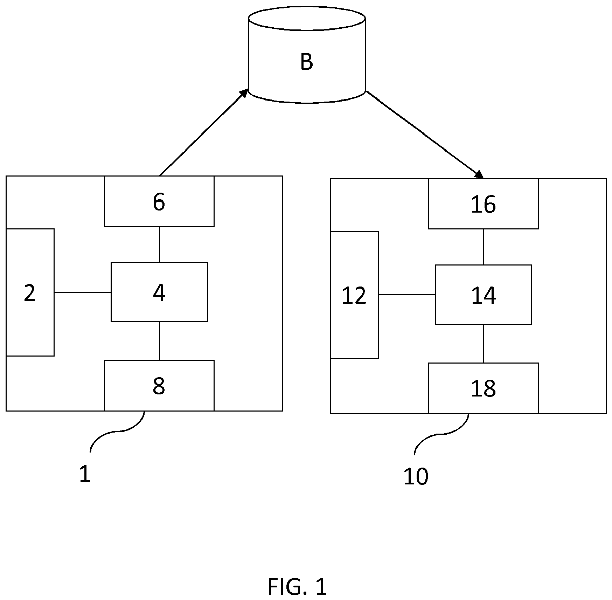

En référence à la **figure 1**, un dispositif d'enrôlement 1 comprend un capteur d'image 2, une unité de traitement de données 4 ainsi qu'une interface d'accès 6 à une base de données B.

Le capteur d'image 2 est typiquement un appareil photo ou une caméra.

L'unité de traitement de données 4 comprend au moins un processeur configuré pour exécuter un algorithme de traitement d'image applicable à une image acquise par le capteur d'image 2.

L'algorithme de traitement d'image est configuré pour extraire depuis une image montrant une photographie, la photographie montrant elle-même un individu de référence, une caractéristique de cette image qui n'est pas un modèle biométrique.

L'algorithme de traitement d'image est de plus configuré pour :
- extraire, depuis toute image montrant une photographie montrant elle-même l'individu de référence, une caractéristique qui diffère de la caractéristique de l'image de référence par un écart inférieur à un seuil déterminé,
- extraire, depuis toute image ne montrant pas l'individu de référence, une caractéristique qui diffère de la caractéristique de l'image de référence par un écart supérieur au seuil déterminé.

Des algorithmes de traitement d'image remplissant ces conditions sont connus de l'homme du métier.

Dans un mode de réalisation, l'algorithme de traitement d'image est un algorithme de classification du type employant un réseau de neurones convolutionnel, également connu sous l'acronyme CNN (pour l'anglais Convolutional Neural Network).

Dans un autre mode de réalisation, l'algorithme de traitement d'image est du type employant un descripteur HOG, c'est-à-dire un descripteur à histogramme de gradient orienté. La caractéristique extraite autre qu'un modèle biométrique est ou comprend alors un histogramme de gradient orienté.

L'homme du métier peut se référer au document FR3047688 pour obtenir des détails supplémentaires sur ces deux exemples d'algorithmes de traitement d'image remplissant les conditions susmentionnées.

Par ailleurs, l'unité de traitement de données 4 comprend au moins un processeur configuré pour exécuter une procédure d'encodage (ce processeur étant identique ou différent de celui utilisé pour exécuter l'algorithme de traitement d'image).

De préférence, la procédure d'encodage est une procédure d'esquisse d'un algorithme de type « secure sketch ». Cette procédure d'esquisse est connue de l'homme du métier. Elle notamment décrite dans le document « Fuzzy Extractors: How to Generate Strong Keys from Biometrics and Other Noisy Data », par Dodis et al. (voir la définition 3 donnée en page 11 de ce document).

D'autres procédures d'encodage peuvent être toutefois être utilisées par l'unité de traitement 4 en lieu et place d'une procédure d'esquisse (par exemple des procédures d'algorithmes de type « fuzzy extractor »).

De façon générale, le dispositif d'enrôlement 1 comprend des moyens d'obtention pour obtenir des données personnelles se rapportant à un individu d'une autre manière que via l'algorithme de traitement d'image.

Ces moyens d'obtention diffèrent selon le type de donnée personnelle considérée.

Les données personnelles peuvent comprendre par exemple un modèle biométrique propre à un individu, produit par un capteur biométrique. Ce capteur biométrique peut lui-même comprendre le capteur d'image 2 et/ou l'unité de traitement de données 4. Ceci est avantageux car il peut être produit un modèle biométrique et une caractéristique autre qu'un modèle biométrique à partir d'une image acquise à l'aide d'un même capteur d'image 2. Le coût global du dispositif d'enrôlement s'en trouve réduit.

En variante ou en complément, les données personnelles peuvent comprendre des données d'état civil d'un individu. Les moyens d'obtention du dispositif d'enrôlement 1 permettant d'obtenir des données d'état civil peuvent comprendre une interface de saisie 8 (clavier, écran tactile, etc.) utilisables par un utilisateur. En variante ou en complément, les moyens d'obtention comprennent un algorithme de reconnaissance de caractères mis en oeuvre sur une image montrant ces données d'état civil sous forme de texte. Dans le cas où un algorithme de reconnaissance de caractères est utilisé, celui-ci peut être mis en oeuvre par l'unité de traitement de données 4 du dispositif 1 sur la base d'une image acquise par le capteur d'image 2.

La base de données B est typiquement externe au dispositif d'enrôlement 1, comme représenté en figure 1. Dans ce cas, l'interface d'accès 6 à la base de données B comprend une interface de communication réseau permettant au dispositif de communiquer par réseau avec la base de données, que ce soit par un réseau de type radio sans fil (Wi-Fi, etc.) ou filaire.

La base de données B est par exemple une base de données distribuée de type « chaine de blocs ». Dans ce cas, la base de données est mémorisée par plusieurs serveurs.

Alternativement, le dispositif d'enrôlement 1 comprend une mémoire mémorisant toute ou partie de la base de données, auquel cas l'interface d'accès à la base de données comprend cette mémoire.

L'interface d'accès 6 permet au dispositif d'enrôlement d'écrire des données dans la base de données B.

On a en outre représenté en figure 1 un dispositif de contrôle d'identité 10, lequel comprend un capteur d'image 12, une unité de traitement de données 14, et une interface d'accès 16 à la base de données B.

Le capteur d'image 12, l'unité de traitement de données 14 et l'interface d'accès 16 sont par exemple être identiques aux éléments 2, 14, 16 du même nom du dispositif d'enrôlement 1, à ceci près que :
- l'unité de traitement de données 14 comprend au moins un processeur configuré pour exécuter une procédure de décodage adaptée pour décoder des données codées par la procédure de codage utilisée par le dispositif d'enrôlement,
- L'interface d'accès permet au dispositif de contrôle d'accéder en lecture à la base de données.

Lorsque la procédure d'encodage utilisée par le dispositif d'enrôlement est une procédure d'esquisse d'un algorithme de type « secure sketch », la procédure de décodage est la procédure récupération (« recovery » en anglais) du même algorithme de type « secure sketch ». Une telle procédure de récupération est également connue de l'homme du métier (voir la définition 3 donnée en page 11 du document « Fuzzy Extractors: How to Generate... » susmentionné).

Les dispositifs 1 et 10 peuvent en fait être un seul et même dispositif cumulant les fonctions d'enrôlement et de contrôle d'identité, auquel cas les deux procédures de l'algorithme « secure sketch » (d'esquisse et de récupération) sont susceptible d'être exécutés par l'unité de traitement de données.

Chacune des dispositifs 1 et 10 peut se présenter sous la forme d'un téléphone mobile performant tel qu'un smartphone, ou bien une tablette numérique, ou encore d'un ordinateur ou d'un équipement d'authentification automatiquement de documents d'identités tel que le dispositif commercialisé par Idemia sous le nom B5000.

La base de données B est par exemple mémorisée par un serveur distant du dispositif 1 et/ou du dispositif 10.

Les dispositifs 1, 10 et ce serveur peuvent communiquer entre directement, par exemple par radiofréquences, soit par le biais d'un réseau.

Le dispositif 10 est censé être utilisé par un utilisateur légitime, telle qu'une organisation gouvernementale, à qui il appartient, c'est-à-dire un utilisateur non frauduleux. Toutefois, le dispositif 10 peut être amené à être utilisé un utilisateur mal intentionné, c'est-à-dire un utilisateur frauduleux. Cet utilisateur frauduleux peut soit être une personne, soit être une entité numérique.

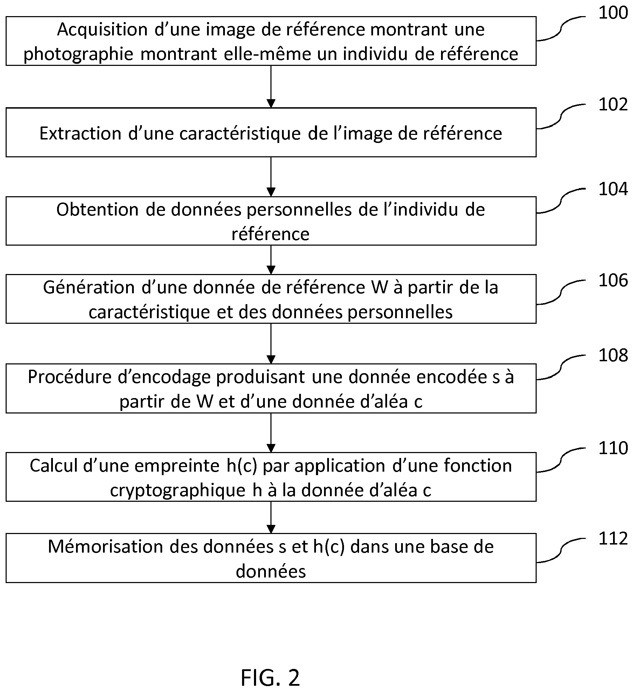

En référence à la **figure 2**, un procédé d'enrôlement de données associées à un individu de référence mis en oeuvre par le dispositif d'enrôlement comprend les étapes suivantes.

Le capteur d'image acquiert une image de référence montrant une photographie, la photographie montrant elle-même l'individu de référence (étape 100). Par photographie montrant un individu, on entend une photographie montrant au moins une partie du corps de l'individu, cette partie du corps étant susceptible de distinguer cet individu d'autres individus (visage, oreilles ou empreintes digitales par exemple).

Est par exemple acquis au cours de l'étape d'acquisition 100 une image montrant un document d'identité de l'individu de référence comprenant une photographie montrant elle-même le visage de l'individu de référence. Le document d'identité est par exemple un passeport, une carte nationale d'identité, un permis de conduire, etc.

L'algorithme de traitement d'image mis en oeuvre par l'unité de traitement 4 extrait depuis l'image de référence une caractéristique de cette image (étape 102). Comme indiqué précédemment, cette caractéristique n'est pas un modèle biométrique. Cette caractéristique est par exemple un histogramme de gradient orienté.

Le dispositif d'enrôlement 1 obtient par ailleurs des données personnelles de l'individu de référence par un autre moyen qu'avec l'algorithme de traitement d'image (étape 104).

Les données personnelles comprennent par exemple un modèle biométrique propre à l'individu de référence et/ou des données d'état civil de l'individu de référence, obtenues par l'un quelconque des moyens décrits précédemment. Si les données personnelles de l'individu de référence comprennent un modèle biométrique, ce modèle est de préférence généré par le dispositif d'enrôlement 1 à partir de l'image de référence. Si les données personnelles de l'individu de référence comprennent des données d'état civil, celles-ci peuvent être saisies dans le dispositif via l'interface de saisie 8 ou bien extraites de l'image de référence par une reconnaissance optique de caractères.

L'unité de traitement de données 4 génère ensuite une donnée de référence W non seulement à partir de la caractéristique extraite au moyen de l'algorithme de traitement d'image au cours de l'étape 102, mais également à partir des données personnelles de l'individu de référence obtenues au cours de l'étape 104.

La donnée de référence W est typiquement une concaténation de la caractéristique et de chaque donnée de référence, étant entendu que la caractéristique et chaque donnée de référence peuvent être considérés comme des séquences de bits. Le nombre de bits de la donnée de référence est ainsi la somme des nombres de bits respectifs de la caractéristique et de chaque donnée personnelle dans le cas d'une telle concaténation.

L'utilisation conjointe de ces deux sources indépendantes permet d'apporter de l'entropie à la donnée W en ce sens que le nombre de valeurs de la donnée de référence est augmenté par rapport à une donnée qui ne dépendrait que de l'une ou l'autre de ces données source.

L'unité de traitement de données 4 applique le processus d'encodage (par exemple procédure d'esquisse d'un algorithme de type « secure sketch ») à la donnée de référence W (étape 108).

La procédure d'encodage prend comme autre donnée d'entrée une donnée d'aléa. La donnée d'aléa est comme son nom l'indique une donnée de valeur aléatoire apportant de l'aléa. Cette donnée d'aléa est typiquement un code correcteur d'erreur.

La procédure d'encodage produit à partir de la donnée de référence et de la donnée d'aléa c une donnée encodée s au cours de l'étape 108. Dans le cas où une procédure d'esquisse est utilisée, cette donnée s est une donnée d'esquisse (« secure sketch » en anglais).

L'unité de traitement de données 4 calcule par ailleurs une empreinte h(c) de la donnée d'aléa par application d'une fonction cryptographique prédéterminée h à la donnée d'aléa c (étape 110). Cette fonction cryptographique est par exemple une fonction de hachage.

L'unité de traitement de données 4 commande une mémorisation, via l'interface d'accès, de la donnée encodée s et de l'empreinte h(c) dans la base de données en association l'une avec l'autre (étape 112). La donnée deux données sont implicitement associées à l'individu de référence puisque c'est sur la base d'informations propres à cet individu de référence que la donnée encodée s a été générée et puisque la donnée d'aléa a été combiné au cours de la procédure d'encodage avec la donnée de référence W.

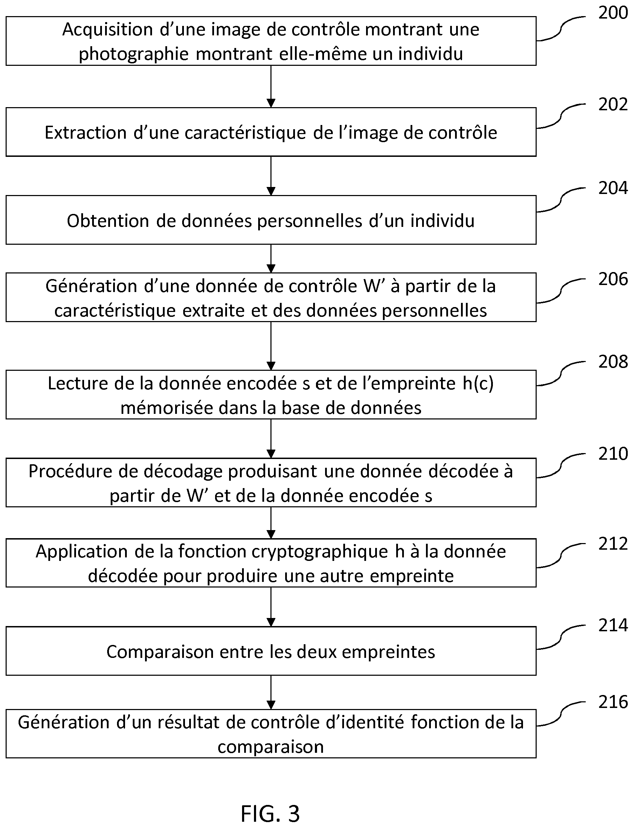

En référence à la **figure 3**, un procédé de contrôle d'identité d'un individu mis en oeuvre par le dispositif de contrôle 10 comprend les étapes suivantes.

Ce procédé est par exemple mis en oeuvre pour conditionner l'accès à une zone sécurisé, par exemple une zone sécurisée d'un aéroport.

Dans ce qui suit, il est supposé qu'un premier individu se présente à un point de contrôle où se trouve le dispositif de contrôle d'identité 10. Ce premier individu détient un document d'identité montrant une photographie, la photographie montrant elle-même un deuxième individu. Si le document d'identité est authentique, le deuxième individu est bien entendu le premier individu. Mais si le document d'identité a été volé à son propriétaire légitime ou a été falsifié (typiquement par remplacement d'une photographie par une autre), le deuxième individu peut être différent du premier individu. Il convient alors de détecter ce type de fraude.

Le capteur d'image 12 acquiert une image de contrôle montrant la photographie montrant elle-même le deuxième individu (étape 200). Est par exemple acquis au cours de l'étape d'acquisition 200 une image de contrôle montrant le document d'identité détenu par le premier individu, comprenant une photographie montrant elle-même le visage de l'individu de référence. Le document d'identité est par exemple un passeport, une carte nationale d'identité, un permis de conduire, etc.

L'algorithme de traitement d'image mis en oeuvre par l'unité de traitement de données 14 extrait depuis l'image de contrôle une caractéristique de cette image. Cette caractéristique est du même type que celle extraite au cours de l'étape 102 mise en oeuvre au cours du procédé d'enrôlement décrit plus haut. La caractéristique n'est donc pas un modèle biométrique. Cette caractéristique est par exemple un histogramme de gradient orienté.

Le dispositif de contrôle d'identité 10 obtient par ailleurs des données personnelles de l'individu de référence par un autre moyen qu'avec l'algorithme de traitement d'image (étape 204).

Les données personnelles obtenues au cours de l'étape 204 ont la même composition que les données personnelles obtenues au cours de l'étape 104 du procédé d'enrôlement (modèle biométrique propre au premier individu et/ou données d'état civil d'un individu par exemple).

Comme décrit précédemment, les données d'état civil peuvent être saisies dans le dispositif de contrôle d'identité 10 via l'interface de saisie 16, laquelle peut être utilisée soit par le premier individu soit par un utilisateur contrôlant l'identité du premier individu. Alternativement, les données d'état civil obtenues au cours de l'étape 204 peuvent être extraites de l'image de contrôle acquise, par une reconnaissance optique de caractères.

L'unité de traitement de données 14 génère ensuite une donnée de contrôle W' (étape 206), non seulement à partir de la caractéristique extraite au moyen de l'algorithme de traitement d'image au cours de l'étape 202 mais également à partir des données personnelles de l'individu de référence obtenues au cours de l'étape 204.

La donnée de contrôle W' est générée de la même manière que la donnée de référence W au cours de l'étape 106.

Il est impossible que la donnée de contrôle W' soit égale à la donnée W, et ce même si le premier individu et le deuxième individu sont en réalité l'individu de référence. En effet, l'image de référence et l'image de contrôles sont des images différentes, acquises à des moments différents et donc dans des conditions différentes, si bien que les caractéristiques extraites respectivement de ces deux images ne peuvent pas non plus être parfaitement identiques. Néanmoins, grâce aux propriétés intrinsèques de l'algorithme de traitement d'image utilisé, la caractéristique extraite au cours de l'étape 204 est comparativement plus proche de la caractéristique de référence si l'image de contrôle montre l'individu de référence, que si ce n'est pas le cas.

Les données personnelles obtenues au cours des étapes 104 et 204 contribuent également à accentuer les différences potentielles entre les données W et W'. En particulier, le modèle biométrique extrait de l'image de contrôle sera bien évidemment plus proche du modèle biométrique de référence dans le cas où le premier individu qui se présente s'avère être l'individu de référence.

La donnée de contrôle W' est par exemple une concaténation de la caractéristique de l'image de contrôle et de chaque donnée de référence obtenue au cours du contrôle, étant entendu que la caractéristique et chaque donnée de référence peuvent être considérés comme des séquences de bits. Le nombre de bits de la donnée bruitée est ainsi la somme des nombres de bits respectifs de la caractéristique et de chaque donnée personnelle dans le cas d'une telle concaténation.

L'utilisation conjointe de ces deux sources indépendantes permet d'apporter de l'entropie à en ce sens que le nombre de valeurs de la donnée de contrôle W' est augmenté, comme c'était également le cas de la donnée W générée lors de l'enrôlement.

L'unité de traitement de données 14 commande une lecture, via l'interface d'accès, de la donnée encodée s et de l'empreinte h(c) associées l'une à l'autre dans la base de données.

L'unité de traitement de données 14 applique la procédure de décodage (par exemple procédure de récupération de l'algorithme « secure sketch ») à la donnée de contrôle W' et la donnée encodée s lue dans la base de données, de façon à produire une donnée décodée.

La procédure de décodage est telle que, si la donnée de contrôle W' est suffisamment proche de la donnée de référence W, alors la donnée décodée est égale à la donnée d'aléa c ayant servi au cours de la procédure d'encodage pour produire la donnée encodée s. Par « suffisamment proche », on entend qu'une distance entre W et W' est inférieure à un seuil prédéterminé, typiquement une distance de Hamming.

En revanche, si la donnée de contrôle W' est suffisamment éloignée de la donnée de référence W, alors la donnée décodée et la donnée d'aléa ont des valeurs différentes. Par « suffisamment éloigné », on entend que la distance entre W et W' est inférieure au seuil prédéterminé.

L'unité de traitement de données 14 applique ensuite la fonction cryptographique h à la donnée décodée pour obtenir une empreinte (étape 212).

L'unité de traitement compare ensuite l'empreinte h(c) lue dans la base de données au cours de l'étape 208 et l'empreinte calculée au cours de l'étape 212 (étape 214).

L'unité de traitement de données 14 génère un résultat de contrôle d'identité indiquant si l'individu montré par la photographie et l'individu détenteur correspondent tous deux à l'individu de référence ou non, en fonction de la comparaison 212 (étape 216).

Lorsque les deux empreintes comparées sont identiques, alors le résultat de contrôle d'identité est un résultat positif indiquant que l'individu montré par la photographie et l'individu visé par les données personnelles obtenues au cours de l'étape 204 correspondent tous deux à l'individu de référence référencé dans la base de données. Il peut alors être considéré que ces éléments sont des preuves suffisantes pour conclure que l'individu qui s'est présenté au point de contrôle est bien référencé dans la base de données et donc qu'il peut obtenir un accès à la zone sécurisée.

Lorsque les deux empreintes comparées sont différentes, le résultat de contrôle d'identité est un résultat négatif indique qu'au moins un parmi l'individu montré par la photographie et l'individu visé par les données personnelles obtenues au cours de l'étape 204 ne correspondent pas à l'individu de référence référencé dans la base de données.

Les étapes de lecture 208 dans la base de données, de calcul 210 de donnée décodée, de calcul 212 d'empreinte, de comparaison 214 et de génération 216 de résultat de contrôle peuvent être répétées pour chaque donnée encodée et d'empreinte associée présente dans la base de données.

Si tous les résultats de contrôle d'identité obtenus à l'issue de ces répétitions sont négatifs, l'unité de traitement de données 14 peut générer un résultat indiquant que l'individu qui s'est présenté au point de contrôle n'est pas référencé dans la base de données. Il peut alors être pris la décision de ne pas autoriser l'individu qui s'est présenté à accéder à la zone sécurisée.

Dans ce qui précède, il a été fait l'hypothèse que l'individu de référence enrôlé est un individu susceptible d'obtenir un accès à une zone sécurisée (la base de données B se comporte alors comme une liste blanche). Alternativement, il peut être envisagé que les individus référencés dans la base de données soient au contraire des individus interdits d'accès à une telle zone (la base de données B se comporte alors comme une liste noire).

## Revendications

1. Procédé d'enrôlement de données destinées à être utilisées pour contrôler l'identité d'un individu, le procédé comprenant des étapes de :
• acquisition (100) d'une image de référence montrant une photographie, la photographie montrant elle-même un individu de référence,
• extraction (102), depuis l'image de référence et par un algorithme de traitement d'image, d'une caractéristique de l'image de référence autre qu'un modèle biométrique, dans lequel l'algorithme de traitement d'image est configuré pour:
∘ extraire, depuis toute image montrant une photographie montrant elle-même l'individu de référence, une caractéristique qui diffère de la caractéristique de l'image de référence par un écart inférieur à un seuil déterminé,
∘ extraire, depuis toute image ne montrant pas l'individu de référence, une caractéristique qui diffère de la caractéristique de l'image de référence par un écart supérieur au seuil déterminé,
• génération (106) d'une donnée de référence (W) à partir de la caractéristique de l'image de référence,
• calcul (108) d'une donnée encodée (s) par application d'une procédure d'encodage à la donnée de référence (W) et à une donnée d'aléa (c),
• calcul (110) d'une empreinte (h(c)) de la donnée d'aléa par application d'une fonction cryptographique prédéterminée à la donnée d'aléa,
• mémorisation (112) dans une base de données de la donnée encodée (s) en association avec l'empreinte, en vue de leur utilisation pour contrôler l'identité d'un individu,
le procédé étant **caractérisé par** une étape d'obtention (104) de données personnelles de l'individu de référence autrement que par l'algorithme de traitement d'image, et par le fait que la donnée de référence (W) est générée (106) également à partir des données personnelles obtenues.

2. Procédé selon la revendication 1, dans lequel la procédure d'encodage est une procédure d'esquisse d'un algorithme de type « secure sketch ».

3. Procédé de contrôle d'identité, le procédé comprenant des étapes de :
• acquisition (200) d'une image de contrôle montrant une photographie, la photographie montrant elle-même un premier individu,
• extraction (202), depuis l'image de contrôle et par un algorithme de traitement d'image, d'une caractéristique de l'image de contrôle autre qu'un modèle biométrique, dans lequel l'algorithme de traitement d'image est configuré pour:
∘ extraire, depuis toute image montrant une photographie montrant elle-même le premier individu, une caractéristique qui diffère de la caractéristique de l'image de contrôle par un écart inférieur à un seuil déterminé,
∘ extraire, depuis toute image ne montrant pas le premier individu, une caractéristique qui diffère de la caractéristique de l'image de contrôle par un écart supérieur au seuil déterminé,
• obtention (204) de données personnelles d'un deuxième individu autrement que par l'algorithme de traitement d'image,
• génération (206) d'une donnée de contrôle (W') à partir de la caractéristique de l'image de contrôle et à partir des données personnelles obtenues,
• lecture (208), dans une base de données, d'une donnée encodée (s) et d'une empreinte d'une donnée d'aléa associées à un individu de référence,
• calcul (210) d'une donnée décodée par application d'une procédure de décodage à la donnée de contrôle (W') et à la donnée encodée (s) lue,
• application (212) d'une fonction cryptographique prédéterminée à la donnée décodée de sorte à produire un une empreinte (h(c)) de la donnée décodée,
• comparaison (214) entre l'empreinte obtenue et l'empreinte lue,
• génération (216) d'un résultat de contrôle d'identité indiquant si le premier individu et le deuxième individu correspondent tous deux à l'individu de référence ou non, en fonction de la comparaison.

4. Procédé selon la revendication 3, dans lequel la procédure de décodage est une procédure de récupération d'un algorithme de type « secure sketch ».

5. Procédé selon l'une des revendications précédentes, dans lequel les données personnelles comprennent des données d'état civil.

6. Procédé selon l'une des revendications précédentes, dans lequel l'image acquise montre un document d'identité comprenant la photographie, et dans lequel les données d'état civil sont extraites de l'image acquise par une reconnaissance optique de caractères.

7. Procédé selon l'une des revendications précédentes, dans lequel les données personnelles comprennent un modèle biométrique.

8. Procédé selon la revendication précédente, dans lequel le modèle biométrique est généré à partir de l'image acquise.

9. Procédé selon l'une des revendications précédentes, dans lequel la donnée de référence (W) ou de contrôle (W') est une concaténation de la caractéristique extraite et de chaque donnée personnelle.

10. Procédé selon la revendication précédente, dans lequel la génération de la donnée dépendant de la caractéristique extraite et des données personnelles obtenues comprend une permutation prédéterminée de la caractéristique extraite et des données personnelles avant leur concaténation.

11. Procédé selon l'une des revendications précédentes, dans lequel la caractéristique de l'image acquise comprend un histogramme de gradient orienté.

12. Produit programme d'ordinateur comprenant des instructions de code de programme pour l'exécution des étapes du procédé selon l'une des revendications précédentes, lorsque ce procédé est exécuté par au moins un processeur.
